# EUROPÄISCHE PATENTSCHRIFT

(11) **EP 3 558 781 B1**
(45) Veröffentlichungstag und Bekanntmachung des Hinweises auf die Patenterteilung: **19.08.2020**
(21) Anmeldenummer: 17804147.1
(22) Anmeldetag: 17.11.2017
(51) Int. Cl.: B61D 15/06

(54) **ZUG-/STOSSEINRICHTUNG UND KRAFTÜBERTRAGUNGSEINHEIT MIT EINER DERARTIGEN ZUG-/STOSSEINRICHTUNG**
TRACTION/BUFFING GEAR, AND FORCE TRANSMISSION UNIT WITH SUCH A TRACTION/BUFFING GEAR
DISPOSITIF DE TAMPONNEMENT ET DE TRACTION ET UNITÉ DE TRANSMISSION DE FORCE COMPRENANT UN DISPOSITIF DE TAMPONNEMENT ET DE TRACTION DE CE TYPE

(30) Priorität: 23.12.2016 DE 102016125554
(43) Veröffentlichungstag der Anmeldung: 30.10.2019
(73) Patentinhaber: Voith Patent GmbH, 89522 Heidenheim (DE)
(72) Erfinder: RADEWAGEN, Christian, 38228 Salzgitter (DE); KOLSHORN, Kay Uwe, 38304 Wolfenbüttel (DE); ROMUND, Mathias, 21710 Engelschoff (DE)
(74) Vertreter: Voith Patent GmbH - Patentabteilung
(86) Internationale Anmeldenummer: PCT/EP2017/079598
(87) Internationale Veröffentlichungsnummer: WO 2018/114161

(56) Entgegenhaltungen:
- EP-A1- 1 905 661
- EP-A1- 2 295 305
- EP-A1- 2 845 784
- WO-A1-2015/128850
- CH-A- 130 824

## Beschreibung

Die Erfindung betrifft eine Zug-/Stoßeinrichtung, im Einzelnen mit den Merkmalen des Oberbegriffs von Anspruch 1. Die Erfindung betrifft ferner eine Kraftübertragungseinheit mit einer derartigen Zug-/Stoßeinrichtung.

Kraftübertragungseinheiten in Form von Kupplungsstangen, insbesondere für den Einsatz in schienengebundenen Fahrzeugen zur Übertragung von Kräften zwischen einem Kupplungskopf und einem Anschlusselement zum wenigstens mittelbarem Anschluss an einen Wagenkasten, beispielsweise einem Lagerbock mit Zug-/Stoßeinrichtungen sind aus dem Stand der Technik in unterschiedlichen Ausführungen bekannt. Derartige Kupplungsstangen können je nach Anforderung neben der Kraftübertragungsfunktion mit reversiblem und/oder irreversiblem Energieverzehr ausgestattet sein. Die Kupplungsstangen sind durch zwei in kraftübertragender Weise miteinander gekoppelte Kraftübertragungselemente charakterisiert. Reversible Energieverzehreinrichtungen sind dabei derart wenigstens mittelbar, d.h. direkt oder unter Zwischenordnung weiterer Bauteile zwischen den beiden Kraftübertragungselementen angeordnet, dass diese die Energie eines Kuppelstoßes durch reversible Längenänderung aufnehmen können. Dies erfolgt in der Regel bis zu einer kritischen Last. Um bei Überlast, d.h. bei Überschreitung einer maximal zulässigen Stoßkraft die in die Kupplungsstange eingeleitete Kraft nicht ungehindert auf die nachfolgenden Anschlusselemente zu leiten unter großer Schädigung dieser oder der Anschlussumgebung, sind irreversible Energieverzehreinrichtungen vorgesehen. Bei diesen handelt es sich um Verformungselemente, die bei Überlast zum Einsatz gelangen und durch eine konstante und definierbare Last über ihren gesamten Verformungsweg charakterisiert sind. Dabei wird je nach Ausführung und Prinzip die durch Überlast eingetragene Energie in plastische Verformungsarbeit oder zum Abschälen genutzt. So werden beispielsweise Stahlverformungsrohre verwendet, die durch einen Kegelring elastoplastisch aufgeweitet werden.

Aus der Druckschrift WO 2009/034123 A1 eine Stoßsicherung bekannt, welche sich insbesondere für die Verwendung als zusätzliche irreversible Stoßsicherungsstufe zusammen mit einem Bauteil zur Kraftübertragung eignet. Diese Stoßsicherung weist ein Energieverzehrelement in Gestalt eines Verformungsrohres sowie ein Gegenelement in Gestalt eines Kraftübertragungselementes auf. Das Gegenelement (Kraftübertragungselement) wirkt dabei mit dem Energieverzehrelement derart zusammen, dass sich nach Überschreiten einer vorab festlegbaren charakteristischen Stoßkraft das als Verformungsrohr ausgebildete Energieverzehrelement plastisch verformt und dabei zumindest einen Teil der bei der Stoßkraftübertragung anfallenden Energie abbaut. Bei der plastischen Verformung des Verformungsrohres bewegen sich das Verformungsrohr (Energieverzehrelement) und das Kraftübertragungselement (Gegenelement) relativ zueinander aufeinander zu.

Derartige Ausführungen sind derart konzipiert, dass die plastische Verformung bei der Auslegung bereits mit zu berücksichtigen ist und nach einem Crash in der Regel auch nicht einfach entfernbar ist. Nach einem Ansprechen, insbesondere im Crashfall ist dann in der Regel die gesamte Kraftübertragungseinheit neu zu erstellen. Auch ist das Verformungsvermögen an die Werkstoffeigenschaften sowie Geometrie und Dimensionierung dieser Stahlrohre gebunden, so dass der in Verformungsarbeit umzuwandelnde Energieeintrag durch Bauraumvorgaben häufig begrenzt ist. Da bei einer Aufweitung in der Regel nur eine begrenzte Verkürzung stattfindet, ist die Verwendung bei sehr geringem zur Verfügung stehendem Bauraum nicht einfach zu realisieren.

Aus der EP 1 905 661 A1 ist eine Zug-/Stoßeinrichtung für Kupplungen von spurgeführten Fahrzeugen bekannt, mit zwei sich entlang einer Längsachse erstreckenden Kraftübertragungselementen, die zum Übertragen von Zug- und Stoßkräften kraftübertragend miteinander verbunden sind, wobei eines der Kraftübertragungselemente als Energieverzehreinrichtung ausgebildet ist.

Eine der vorliegenden Erfindung zugrunde liegenden Aufgabe besteht daher darin, eine Zug-/Stoßeinrichtung bereitzustellen, die neben der Kraftübertragung im Normalbetrieb für einen Crashfall die Absorption großer Kräfte auch in kurzen zur Verfügung stehenden Einbauraum zulässt. Bei einem Crashfall soll der irreversible Energieverzehr beim Ansprechen nach Möglichkeit die anderen Komponenten, insbesondere die Kraftübertragungselemente nicht beeinträchtigen, so dass diese ein hohes Wiederverwertungspotential zum Wiederaufbau der Zug-/Stoßeinrichtung aufweisen.

Die erfindungsgemäße Lösung der Aufgabe ist durch die Merkmale der Ansprüche 1 und 19 charakterisiert. Vorteilhafte Weiterbildungen sind in den Unteransprüchen beschrieben.

Eine Zug-/Stoßeinrichtung, insbesondere für Kupplungen von spurgeführten Fahrzeugen mit zwei sich entlang einer Längsachse erstreckenden Kraftübertragungselementen, die zum Übertragen von Zug- und Stoßkräften kraftübertragend miteinander verbunden sind und bei Überschreitung einer maximal zulässigen Stoßkraft relativ zueinander bewegbar sind weist eine irreversible beziehungsweise destruktive Energieverzehreinrichtung auf, welche derart ausgebildet und angeordnet ist, bei Überschreitung einer maximal zulässigen Stoßkraft anzusprechen. Erfindungsgemäß ist vorgesehen, dass die irreversible Energieverzehreinrichtung zumindest ein Energieverzehrelement umfasst, welches zumindest teil- oder bereichsweise, vorzugsweise vollständig aus einem Faserverbundwerkstoff insbesondere Faser-Kunststoff-Verbundwerkstoff besteht und die irreversible Energieverzehreinrichtung wenigstens bereichsweise von einem ersten der beiden Kraftübertragungselemente aufgenommen ist. Dieses erste Kraftübertragungselement weist einen Düsenabschnitt auf oder bildet diesen aus. Das irreversible Energieverzehrelement ist derart gegenüber dem Düsenabschnitt und dem anderen zweiten Kraftübertragungselement angeordnet, dass bei Einleitung einer die maximal zulässige Stoßkraft überschreitenden Stoßkraft in die Zug-/Stoßeinrichtung das irreversible Energieverzehrelement durch den Düsenabschnitt unter zumindest teilweiser, vorzugsweise vollständiger Zerfaserung der aus Faserverbundwerkstoff gebildeten Bereiche gedrückt wird.

Unter einer Zug-/Stoßeinrichtung wird insbesondere eine Einrichtung verstanden, über welche Zugkräfte und Stoßkräfte bis zu einer maximal zulässigen Größe zwischen zwei Anschlusselementen übertragbar sind. D.h. es wird darunter insbesondere eine Einrichtung verstanden, welche im Kraftfluss zwischen zwei Anschlusselementen als Kraftübertragungseinrichtung anordenbar ist und die Übertragung von Kräften von einem auf das andere Kraftübertragungselement ermöglicht.

Der Begriff "Element" ist funktional zu verstehen. Dieser bezieht sich sowohl auf die Ausführung als Einzelbauteil als auch die Zusammensetzung aus mehreren Komponenten zu einem Bauteil, welches der Realisierung einer bestimmten Funktion dient. Ein Kraftübertragungselement kann daher ein- oder auch mehrteilig ausgebildet sein.

Als Faserverbundwerkstoff wird im Allgemeinen ein aus einer bettenden Matrix sowie verstärkenden Fasern bestehender Mehrphasen- oder Mischwerkstoff verstanden. Die Funktion der Matrix besteht darin, die Fasern in einer vorbestimmten Position zu halten, Spannungen zwischen den Fasern zu übertragen und die Fasern vor äußeren Einflüssen zu schützen. Die Verstärkungsfasern sind für die die tragenden mechanischen Eigenschaften verantwortlich. Als Verstärkungsfasern sind insbesondere Glas- und Kohlenstofffasern geeignet.

Bei der erfindungsgemäßen Lösung wird zumindest ein Teil der in die Zug-/Stoßeinrichtung eingeleiteten Stoßenergie dadurch abgebaut, dass das Energieverzehrelement nicht wie bei Energieverzehrelementen aus Stahl plastisch verformt wird, sondern zumindest teilweise in Einzelteile zerlegt wird. D.h. bei einem Ansprechen der Energieverzehreinrichtung wird die in diese eingeleitete Stoßenergie zum Zerfasern der Faserverbundwerkstoffbereiche genutzt und somit zumindest teilweise abgebaut. Da das Zerfasern und Pulverisieren im Vergleich zum üblichen plastischen Verformen wesentlich mehr Energie erfordert, ist die erfindungsgemäße Zug-/Stoßeinrichtung insbesondere auch für Anwendungen geeignet, bei welchen hohe gewichtsspezifische Stoßenergien abzubauen sind. Unter dem Begriff Zerfasern eines aus Faserverbundwerkstoff gebildeten Bereiches des irreversiblen Energieverzehrelementes ist daher insbesondere ein Zerstören der Faserstruktur des Faserverbundwerkstoffes bzw. des Bereiches aus Faserverbundwerkstoff zu verstehen, wobei eine Zerlegung dessen in Einzelteile, insbesondere Fragmente bis hin zur Pulverisierung erfolgt.

Die erfindungsgemäße Ausführung erlaubt die Integration eines irreversiblen Energieverzehrs zur Absorption sehr hoher Kräfte auch bei geringem zur Verfügung stehendem Bauraum in eine Zug-/Stoßeinrichtung. Durch die zumindest teilweise Ausbildung des irreversiblen Energieverzehrelementes aus Faserverbundwerkstoff kann der Energieverzehr definiert eingestellt werden und die ansonsten bei plastischer Verformung von aus dem Stand der Technik bekannten Stahlrohren auftretenden Schädigungen an den Kraftübertragungselementen vermieden werden. Die Verwendung eines aus Faserverbundwerkstoff ausgebildeten Energieverzehrelementes ist ferner durch seine Leichtbauweise charakterisiert, welche zur Reduzierung des Gesamtgewichtes der Zug-/Stoßeinrichtung genutzt werden kann.

In einer vorteilhaften Ausbildung ist im ersten Kraftübertragungselement in Durchtriebsrichtung des Energieverzehrelementes durch den Düsenabschnitt betrachtet im Bereich des Düsenabschnittes und/oder dem Düsenabschnitt nachgeordnet ein Hohlraumbereich vorgesehen. In der Wandung des ersten Kraftübertragungselementes ist wenigstens eine, vorzugsweise eine Mehrzahl von in Umfangsrichtung des ersten Kraftübertragungselementes angeordneten und sich durch die Wandung vom Hohlraumbereich zum Außenumfang erstreckende Durchgangsöffnungen vorgesehen. Die einzelne Durchgangsöffnung ist derart angeordnet und ausgebildet, die beim Durchdrücken des irreversiblen Energieverzehrelementes durch den Düsenabschnitt entstehenden Fasern oder Bruchteile zumindest teilweise, vorzugsweise vollständig nach außerhalb des ersten Kraftübertragungselementes abzuführen. Durch die räumlich nahe Abfuhr der beim Zerfasern entstehenden Fragmente und Fasern wird ein Verstopfen durch die auch längeren Energieverzehrelementen kontinuierlich erzeugten Fragmente und Fasern vermieden. Dies ermöglicht sehr kompakt ausgeführte Zug-/Stoßeinrichtungen, insbesondere mit geringer Länge in Längsrichtung, da den Düsenbereichen keine großen Hohlraumbereiche zur Aufnahme der beim Zerfasern entstehenden Fragmente und Fasern zuzuordnen sind und die Energieverzehrelemente in Längsrichtung der Zug-/Stoßeinrichtung betrachtet trotzdem relativ lang bauen können und damit ein hohes Energieabsorptionsvermögen bereitstellen.

In einer weiteren Weiterbildung, die zusätzlich oder alternativ zu vorgenannter Ausbildung mit als Durchgangsöffnungen ausgeführten Abführöffnungen vorgesehen werden kann, ist der im ersten Kraftübertragungselement im Bereich des Düsenabschnittes und/oder dem Düsenabschnitt nachgeordnet vorgesehene Hohlraumbereich derart ausgebildet und angeordnet, die beim Durchdrücken des irreversiblen Energieverzehrelementes durch den Düsenabschnitt entstehenden Fasern oder Bruchteile zumindest teilweise, vorzugsweise vollständig aufzunehmen. Im letztgenannten Fall kann auf die als Abführöffnungen fungierenden Durchgangsöffnungen vollständig verzichtet werden.

In besonders vorteilhafter Weise können die Eigenschaften derartiger Energieverzehrelemente aus Faserverbundwerkstoff an den zu erwartenden Lastfall als Funktion zumindest einer der nachfolgend genannten Größen definiert angepasst werden:
- Faserarchitektur und/oder Lagenaufbau der Fasern
- Form und/oder Dimensionierung

So kann beispielsweise die Festigkeit und das Ansprechverhalten der Energieverzehreinrichtung definiert voreingestellt werden, indem der Anteil der in Richtung der Stoßkraftübertragung verlegten Fasern variiert wird.

Bezüglich der Ausbildung des einzelnen irreversiblen Energieverzehrelementes besteht grundsätzlich eine Mehrzahl von Möglichkeiten. Dieses kann als ein Element ausgewählt aus der nachfolgenden Gruppe von Elementen ausgebildet sein:
- Hohlkörper, insbesondere Hohlkörper mit zylindrischem oder elliptischem Querschnitt
- Hülse
- Vollprofilelement.

Dabei kann das einzelne irreversible Energieverzehrelement über seine Erstreckung entlang der Längsachse betrachtet mit konstantem oder aber veränderlichem Querschnitt ausgebildet sein.

Die irreversible Energieverzehreinrichtung kann von einem einzelnen irreversiblen Energieverzehrelement oder einer Mehrzahl dieser gebildet werden. Im erst genannten Fall ist das einzelne Energieverzehrelement gemäß einer bevorzugten Ausbildung zur gleichmäßigen Energieabsorption koaxial zu den Kraftübertragungselementen bzw. der Längsachse angeordnet. Dieses ist dann vorzugsweise symmetrisch, insbesondere rotationssymmetrisch aufgebaut.

Im zweiten Fall ist eine Mehrzahl von irreversiblen Energieverzehrelementen vorgesehen. Bei gewählter Anordnung in Reihe sind diese hintereinandergeschaltet und sprechen durch Beaufschlagung untereinander an. Das Gesamtabsorptionsvermögen wird durch die Summe der Einzelabsorptionsvermögen bestimmt. Diese Lösung erlaubt für Zug-/Stoßeinrichtungen unterschiedlicher Erstreckung in Längsrichtung die Verwendung standardisiert ausgeführter irreversibler Energieverzehrelemente durch Kombination dieser und reduziert damit die Teilevielfalt.

Bei paralleler Anordnung können die einzelnen Energieverzehrelemente in einer ersten Ausbildung zumindest teilweise bezogen auf ihre Erstreckung in Längsrichtung der Zug-/Stoßeinrichtung ineinander geschachtelt angeordnet werden. Diese können dabei in Richtung der Längsachse betrachtet entweder einander hinsichtlich ihres Erstreckungsbereiches in dieser Richtung vollständig überlappend ausgebildet und angeordnet sein. Andererseits besteht die Möglichkeit zur Erzielung eines nacheinander erfolgenden Ansprechens und zur Beeinflussung der Größe und des Verlaufs des Energieverzehrs, die einzelnen Energieverzehrelemente mit unterschiedlicher Erstreckung in Längsrichtung der Zug-/Stoßeinrichtung auszubilden.

In einer zweiten Ausbildung der parallelen Anordnung weist das Düsenabschnitt aufweisende erste Kraftübertragungselement eine Vielzahl von in Umfangsrichtung um die Längsachse angeordneten einzelnen Düsenelementen auf. Die irreversible Energieverzehreinrichtung umfasst eine Mehrzahl von derartigen Energieverzehrelementen, die parallel zueinander angeordnet sind, wobei die Anordnung in Umfangsrichtung um die Längsachse beabstandet zueinander erfolgt. Die Anordnung, insbesondere Zuordnung zu den Düsenelementen erfolgt derart, um bei Überschreitung der maximal zulässigen Stoßkraft durch die einzelnen Düsenelemente gedrückt zu werden.

Die Anordnung und Zuordnung des irreversiblen Energieverzehrelementes zum ersten Kraftübertragungselement kann auf unterschiedliche Art und Weise erfolgen.
In einer ersten Variante ist das einzelne irreversible Energieverzehrelement außerhalb des Kraftflusses angeordnet und am ersten Kraftübertragungselement frei von einer Verbindung mit diesem geführt. Im einfachsten Fall ist dazu das irreversible Energieverzehrelement in das erste Kraftübertragungselement lediglich mit Spielpassung eingeführt.

In einer zweiten Variante ist zur Lagefixierung das einzelne irreversible Energieverzehrelement am ersten Kraftübertragungselement und/oder zweiten Kraftübertragungselement oder einem vom zweiten Kraftübertragungselement wenigstens mittelbar mit einer Kraft beaufschlagtem Element zum Beaufschlagen des Energieverzehrelementes geführt.

In der dritten Variante ist das einzelne irreversible Energieverzehrelement am ersten Kraftübertragungselement befestigt oder zwischen diesem und dem zweiten Kraftübertragungselement oder dem von diesem beaufschlagten Element vorgespannt angeordnet. Die Befestigung am ersten Kraftübertragungselement kann durch Kraftschluss, Formschluss oder Stoffschluss erfolgen. Im einfachsten Fall ist das irreversible Energieverzehrelement zur Lagefixierung lediglich eingeklebt.

Bezüglich der konstruktiven Ausbildung der Kraftübertragungselemente ist eine Vielzahl von Möglichkeiten denkbar. In einer bevorzugten Ausbildung ist das erste Kraftübertragungselement als zumindest einseitig offener Hohlkörper, vorzugsweise rohrförmiger Körper ausgebildet und das zweite Kraftübertragungselement als Zugstange, wobei die Zugstange mit ihrem zum ersten Kraftübertragungselement weisenden Endbereich vom ersten Kraftübertragungselement aufgenommen ist. Beide sind über eine kraftübertragende Verbindung wenigstens mittelbar, d.h. entweder direkt oder unter Zwischenordnung weiterer Elemente im Kraftfluss miteinander gekoppelt. Zur Beaufschlagung des irreversiblen Energieverzehrelementes ist ein Beaufschlagungselement vorgesehen. Dieses wird entweder direkt vom zweiten Kraftübertragungselement gebildet oder aber das zweite Kraftübertragungselement wirkt auf dieses unter dem Einfluss einer die maximal zulässige Stoßkraft überschreitenden Kraft in der Weise, dass über das Beaufschlagungselement diese erhöhte Kraft in das irreversible Energieverzehrelement eingetragen wird.

Die kraftübertragende Verbindung zwischen erstem und zweiten Kraftübertragungselement erfolgt in einer ersten Ausbildung direkt, wobei in der Verbindung eine Sollbruchstelle integriert ist, welche bei der zulässigen maximalen Stoßkraft anspricht und unter Aufhebung der kraftübertragenden Verbindung eine Relativbewegung von erstem und zweitem Kraftübertragungselement zueinander zulässt. Die Sollbruchstelle wird im einfachsten Fall durch die Verbindungseinrichtungen bereitgestellt. Diese umfassen beispielsweise Abreißelemente in Form von Abreißschrauben. Andere Ausführungen sind denkbar, beispielsweise stoffschlüssige Verbindungen über Schweißnähte etc. Die Zugstange weist in diesem Fall einen Bereich auf, welcher neben der Funktion der Erstellung einer Verbindung mit dem ersten Kraftübertragungselement auch einen Flächenbereich zum Zusammenwirken mit dem irreversiblen Energieverzehrelement bereitstellt. Dies wird im einfachsten Fall durch einen integralen Flansch oder einen Bereich mit Querschnittsvergrößerung realisiert. Ein separat mit der Zugstange verbindbares Flanschelement ist ebenfalls möglich.

Erfolgt die Verbindung nicht direkt können in einer Weiterbildung aller vorbeschriebener Ausführungen die kraftübertragenden Verbindungen zwischen erstem und zweitem Kraftübertragungselement in Zugkraftrichtung unter Zwischenschaltung einer Dämpfungseinrichtung erfolgen. Alternativ oder aber zusätzlich erfolgt die kraftübertragende Verbindung in Stoßkraftrichtung unter Zwischenschaltung einer Dämpfungseinrichtung. Die Dämpfungseinrichtungen sind dabei als reversible Energieverzehreinrichtungen ausgeführt, wobei die einzelne Dämpfungseinrichtung als Einrichtung ausgewählt aus der nachfolgende Gruppe ausgebildet ist:
- Federeinrichtung
- gashydraulische Dämpfungseinrichtung
- hydrostatische Dämpfungseinrichtung
oder eine Kombination aus vorgenannten.
Diese ermöglichen durch reversible Längenänderung eine Aufnahme von Kuppelstößen.

Bei diesen Ausführungen ist beispielsweise ein einen Druckteller bildendes scheiben- oder plattenförmiges Element vorgesehen, welches mit dem ersten Kraftübertragungselement in Stoßrichtung dem Düsenabschnitt in Längsrichtung betrachtet vorgeordnet verbunden ist, und einen Flächenbereich zur Beaufschlagung des irreversiblen Energieverzehrelementes aufweist. In diesem Fall übernimmt der Druckteller zwei Funktionen, im Einzelnen ist er Bestandteil der kraftübertragenden Verbindung und zum anderen bildet dieser das Beaufschlagungselement bei Aufhebung dieser für das irreversible Energieverzehrelement. Die Zugstange wird dazu durch den Druckteller geführt und weist einen Zuganschlag und einen Druckanschlag auf, wobei diese in axialer Richtung, d.h. Längsrichtung der Zugstange beabstandet zueinander angeordnet sind. In der Verbindung zwischen Druckteller und erstem Kraftübertragungselement ist eine Sollbruchstelle vorgesehen. Der Druckteller kann dazu integral mit dem Kraftübertragungselement ausgebildet sein und die Sollbruchstelle über eine starke Querschnittsveränderung realisiert werden. Vorzugsweise ist dieser jedoch als separates Bauteil ausgeführt, der über Verbindungseinrichtungen, vorzugsweise über Abreißeinrichtungen mit dem Kraftübertragungselement verbunden ist. Der Druckteller weist einen Flächenbereich zum Zusammenwirken mit dem Zuganschlag der Zugstange zur Kraftübertragung in Zugkraftrichtung eine einen Flächenbereich zum Zusammenwirken mit dem Druckanschlag der Zugstange zur Kraftübertragung in Stoßrichtung auf. Diese Flächenbereiche sind an unterschiedlichen Stirnseiten des Drucktellers angeordnet.

Wie bereits ausgeführt kann jeweils zwischen Zuganschlag und Druckteller oder Druckanschlag und Druckteller noch eine reversible Energieverzehreinrichtung vorgesehen werden.

Bei allen Ausführungen erfolgt bei Überschreitung einer vordefinierten maximal zulässigen Stoßkraft eine Aufhebung der Verbindung unter Relativbewegung der Kraftübertragungselemente, vorzugsweise zueinander, wobei in diesem Fall entweder das zweite Kraftübertragungselement direkt oder über den Druckteller als Betätigungselement auf das irreversible Energieverzehrelement einwirkt.

Es versteht sich, dass die Funktionen von erstem Kraftübertragungselement und zweitem in ihrer Zuordnung zu Zugstange und Gegenelement auch vertauschen lassen. Die Begrifflichkeit erstes und zweites Kraftübertragungselement legt dabei nicht die Richtung des Kraftflusses fest sondern dient der Unterscheidung der beiden.

Die Ausbildung des Düsenabschnittes kann bei allen Ausführungen integral am Kraftübertragungselement erfolgen, d.h. entweder durch Querschnittsverjüngung oder Vorsehen eines Vorsprunges. Der Düsenabschnitt kann ferner von einem separaten vom Kraftübertragungselement aufgenommenen Bauteil gebildet werden. Diese kann dann beispielsweise kraftschlüssig, formschlüssig oder stoffschlüssig mit dem Kraftübertragungselement zur Lagefixierung verbunden sein. Die Düse kann dabei beispielsweise mit konstanter Querschnittsänderung in Längsrichtung oder stufenweiser Änderung ausgebildet werden.

In besonders vorteilhafter Ausbildung finden derartige Zug-/Stoßeinrichtungen in Kraftübertragungseinheiten Verwendung. Besonders bevorzugt ist eine Anwendung in einer Kupplungsstange eines schienengebundenen Fahrzeuges, wobei in diesem Fall eines der Kraftübertragungselemente wenigstens mittelbar mit einem Kupplungskopf verbunden ist und das andere mit einem Anschlusselement am Wagenkasten.

Die erfindungsgemäße Lösung wird nachfolgend anhand von Figuren erläutert.

Die Zug-/Stoßeinrichtungen 1 erfindungsgemäßer Ausführungen umfassen zumindest zwei Kraftübertragungselemente 2 und 3, welche entlang einer theoretischen und in Längsrichtung der Zug-/Stoßeinrichtung 1 ausgerichteten Längsachse L erstreckend angeordnet sind und zumindest zur Übertragung von Zugkräften, vorzugsweise auch von Stoßkräften wenigstens mittelbar miteinander kraftübertragend gekoppelt sind. Die Längsrichtung entspricht dabei der Richtung, in welcher die Hauptrichtungskomponenten der Zug- und Stoßkräfte ausgerichtet sind. Die Kopplung kann dabei direkt oder über Übertragungselemente, insbesondere unter Zwischenordnung von Dämpfungselementen erfolgen. Zumindest eines der beiden Kraftübertragungselemente 2 oder 3 bildet einen Innenraum 5 zum zumindest teilweisen Aufnehmen zumindest eines irreversiblen Energieverzehrelementes 10. Das Energieverzehrelement 10 ist zumindest teilweise, vorzugsweise vollständig aus einem Faser-Kunststoff-Verbund gebildet. Das das Energieverzehrelement 10 wenigstens teilweise aufnehmende Kraftübertragungselement 2 oder 3 weist ferner einen Düsenabschnitt 4 auf oder bildet diesen. Das destruktive Energieverzehrelement 10 ist dabei derart von dem einen Düsenabschnitt 4 aufweisenden Kraftübertragungselement 2 oder 3 zumindest teilweise aufgenommen, dass dieses bei einer bei Überschreitung einer zulässigen maximalen Stoßkraft erfolgenden Relativbewegung der beiden Kraftübertragungselemente 2, 3 zueinander durch den Düsenabschnitt 4 gedrückt wird und dabei eine destruktive Verformung und gegebenenfalls Zerfaserung erfährt.

Das Energieverzehrelement 10 kann entweder lose, d.h. frei von einer Verbindung mit dem dieses aufnehmende Kraftübertragungselement in dieses eingebracht werden und ist damit im Normalbetrieb nicht an der Kraftübertragung beteiligt. Gemäß einer alternativen Ausbildung kann dieses auch am Kraftübertragungselement befestigt oder aber mit Vorspannung eingebaut werden. Vorzugsweise ist das Energieverzehrelement 10 als zylindrisches Bauteil ausgebildet, welches in Umfangsrichtung um die Längsachse ausgebildet ist.

Bei Überschreitung einer maximal zulässigen Stoßkraft erfolgt dabei eine Aufhebung der kraftübertragenden Verbindung zwischen den beiden Kraftübertragungselementen 2, 3, welche die angesprochene Relativbewegung ermöglicht. Das Energieverzehrelement 10 wird dann entweder direkt von dem jeweils anderen Kraftübertragungselement oder indirekt durch Bauelemente, auf welche dieses Kraftübertragungselement einwirkt, beaufschlagt und durch den Düsenabschnitt 4 gedrückt. Bezüglich der Abfuhr des zerstörten bzw. zerfaserten Materials bestehen grundlegend zwei Möglichkeiten. Die erste ist durch das Vorsehen von Öffnungen 7 am Düsenabschnitt 4 aufweisenden Kraftübertragungselement charakterisiert. Diese Öffnungen 7 sind in Stoßkraftrichtung dem Düsenabschnitt 4 nachgeordnet. Die zweite Möglichkeit ist durch einen vorzusehenden Innenraum innerhalb des Kraftübertragungselementes charakterisiert.

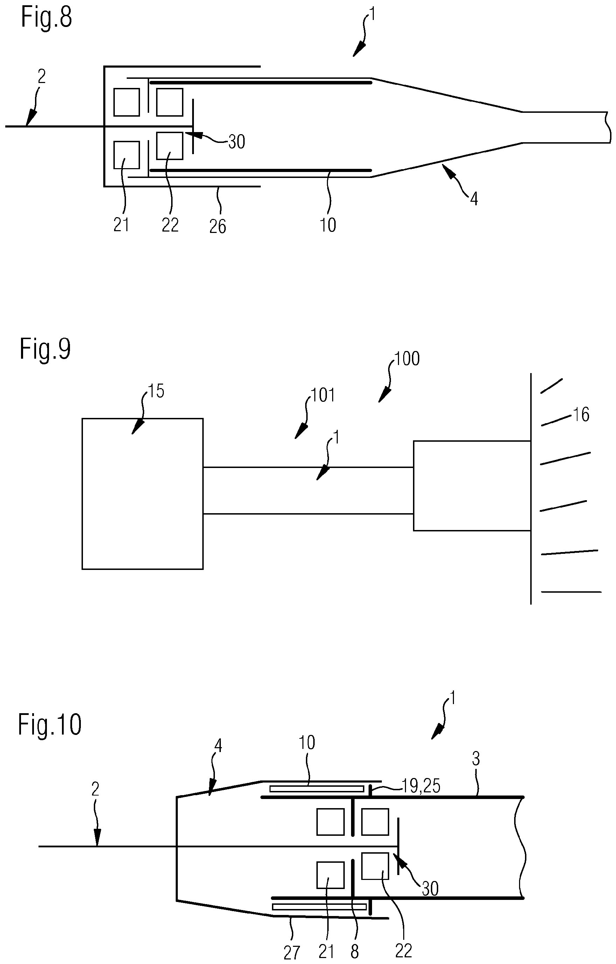

Vorzugsweise weisen erstes und zweites Kraftübertragungselement 2, 3 einen zylindrischen oder elliptischen Querschnitt auf. Erstes und zweites Kraftübertragungselement sind koaxial zueinander angeordnet.
Alle Ausführungen sind vorzugsweise als Zug-/Stoßeinrichtungen 1 einer Kraftübertragungseinheit 100 in Form einer Kupplungsstange 101 ausgebildet. Die Kraftübertragungselemente 2, 3 werden dabei von Kupplungsstangenelementen gebildet. Dabei ist in Kraftübertragungselement 2 oder 3 mit einem hier nicht dargestellten Kupplungskopf zur Kopplung mit einem Gegenkupplungskopf wenigstens mittelbar verbunden. Das andere Kraftübertragungselement 3 ist dann wenigstens mittelbar mit einem Anschlusselement zum Anschluss am Wagenkasten gekoppelt bzw. verbunden, beispielsweise über eine gelenkige Anordnung. Vorzugsweise ist das Kraftübertragungselement 2 als Zugstange ausgeführt. Das Kraftübertragungselement 3 bildet dann dass mit der Zugstange gekoppelte Gegenelement. Eine Anordnungsmöglichkeit in einer Kraftübertragungseinheit 100 zwischen einem Kupplungskopf 15 und einem Wagenkasten 16 ist beispielhaft in Figur 9 wiedergegeben.

Jedes der Kraftübertragungselemente 2, 3 kann ein- oder mehrteilig ausgebildet sein.

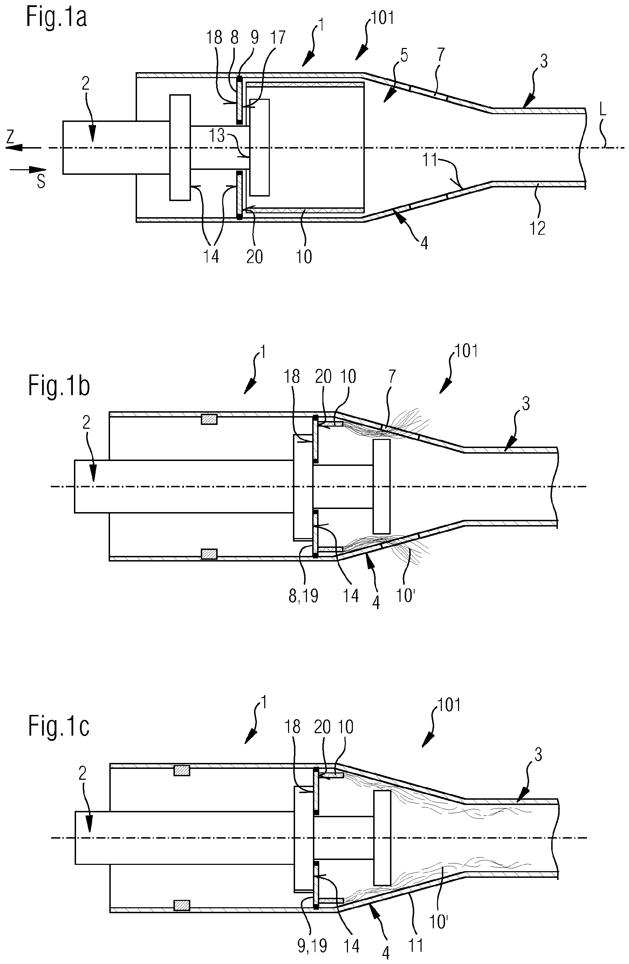

Die Figuren 1 bis 5 verdeutlichen in schematisiert vereinfachter Darstellung den Grundaufbau und die die Grundfunktion verschiedener Ausbildungen einer Zug-/Stoßeinrichtung 1 gemäß einer ersten und besonders vorteilhaften Ausführung. Der Grundaufbau ist gleich, weshalb für gleiche Elemente die gleichen Bezugsziffern verwendet werden.

Die Figuren 1a und 1b verdeutlichen in schematisiert stark vereinfachter Darstellung eine erste Ausbildung einer Zug-/Stoßeinrichtung 1 gemäß der ersten Ausführung in zwei Funktionsstellungen. Bei dieser wird das erste Kraftübertragungselement 2 von einer Zugstange gebildet. Das zweite Kraftübertragungselement 3 wird von einem sich entlang der Längsachse L erstreckenden zylindrischen Element mit unterschiedlichen Querschnittsbereichen gebildet. Das zylindrische Element umschließt dabei einen Innenraum 5 in Umfangsrichtung um die Längsachse L betrachtet. Der Düsenabschnitt 4 am Kraftübertragungselement 3 ist entweder vom Innenumfang 11 des zylindrischen Elementes gebildet oder aber von einem zusätzlichen, im Innenraum 5 angeordneten und hier nicht dargestellten Bauteil, welches mit dem zylindrischen Element verbunden ist. Die Verbindung kann kraftschlüssig, formschlüssig oder stoffschlüssig oder durch eine Kombination dieser Verbindungsarten erfolgen.

Das erste Kraftübertragungselement 2 ist hier über seine Erstreckung in Längsrichtung betrachtet zumindest teilweise vom zweiten Kraftübertragungselement 3 aufgenommen.

Erstes und zweites Kraftübertragungselement 2, 3 sind miteinander kraftübertragend verbunden. D.h. der Kraftfluss führt über beide Elemente. Die Verbindung erfolgt gemäß Figur 1a derart, dass das Kraftübertragungselement 2 unter Einfluss der Zugkraft sich mit einem Zuganschlag 13 am zweiten Kraftübertragungselement 3, hier an einem von einem separaten Bauteil gebildeten und mit diesem verbundenen Druckteller 8 abstützt. Der Druckteller 8 weist dazu einen Zugkraftanschlag-Flächenbereich 17 auf. Die Verbindung zwischen Druckteller 8 und Wandung 12 des Kraftübertragungselementes 3 kann kraft- oder form- oder stoffschlüssig erfolgen. Denkbar ist auch eine Kombination. Die Verbindung ist dabei für eine maximal zulässige Kraft, insbesondere Zug- oder Stoßkraft ausgelegt. In dieser ist eine Sollbruchstelle 9 integriert, die bei Überschreiten dieser maximal zulässigen Kraft - Zug- oder Stoßkraft - anspricht und die Verbindung aufhebt. Unter Zugkrafteinwirkung stützt sich der Zuganschlag 13 am Zugkraftanschlag-Flächenbereich 17 ab und überträgt damit die Kraft auf den Druckteller 8 und über die Verbindung mit dem zylindrischen Element auf dieses. Treten Stoßkräfte auf, wird das Kraftübertragungselement 2 relativ zum Kraftübertragungselement 3 in Stoßkraftrichtung, d.h. im vorliegenden Fall aufeinander zu bewegt und kommt mit einem Druckkraftanschlag 14 an einem Druckkraftanschlags-Flächenbereich 18 am Druckteller 8 zum Anliegen. Druckanschlag 14 und Zuganschlag 13 in axialer Richtung versetzt zueinander angeordnet, d.h. beabstandet zueinander. Je nach Größe der Stoßkraft wird diese über den Druckteller 8 auf das zylindrische Element übertragen oder aber bei Überschreitung der maximal zulässigen Stoßkraft die Verbindung aufgehoben, in dem die Sollbruchstelle 9 anspricht. Der Druckteller 8 fungiert dann als Beaufschlagungselement 19 für das Energieverzehrelement 10. Dieser wird unter Stoßkrafteinfluss in Richtung des Energieverzehrelementes 10 bewegt und beaufschlagt dieses. Der Druckteller 8 weist dazu im dargestellten Fall einen Beaufschlagungsflächenbereich 20 auf. Der Beaufschlagungsflächenbereich 20 ist im dargestellten Fall in radialer Richtung versetzt zum Zugkraftanschlag-Flächenbereich 17 angeordnet. Das Energieverzehrelement 10 wird durch den Düsenabschnitt 4 gedrückt und irreversibel verformt bzw. zerstört. Die dabei entstehenden Bruchstücke werden vorzugsweise über an dem zweiten Kraftübertragungselement 3 in Stoßkraftrichtung dem Düsenabschnitt 4 nachgeordnet angeordnete Öffnungen 7 abgeführt. Dieser Zustand ist in Figur 1b wiedergegeben. Es ist auch denkbar, dass ein Teil der Bruchstücke und Fasern oder aber alles im zweiten Kraftübertragungselement 3 verbleibt. In diesem Fall ist das zweite Kraftübertragungselement 3 mit einem dem Düsenabschnitt 4 in Stoßkraftrichtung nachgeordneten verlängerten Innenraum ausgeführt, wie in Figur 1c beispielhaft wiedergegeben.

Bei allen vor- und nachbeschriebenen Ausführungen können in Abhängigkeit der Ausführung des Kraftübertragungselementes 2 in Form der der Zugstange Abschnitte dieser, insbesondere radiale Flächenbereiche an den die Zug- und Druckanschläge 13, 14 bildenden Querschnittsvergrößerungen, die Funktion der Führung der Zugstange bei Relativbewegung gegenüber dem Kraftübertragungselement 3 übernehmen. Die Zug- und Druckanschläge 13, 14 bildenden Querschnittsvergrößerungen sind dabei entweder integral an der Zugstange ausgebildet oder werden von separaten Bauteilen, insbesondere scheibenförmigen Elementen gebildet, die mit der Zugstange verbunden werden.

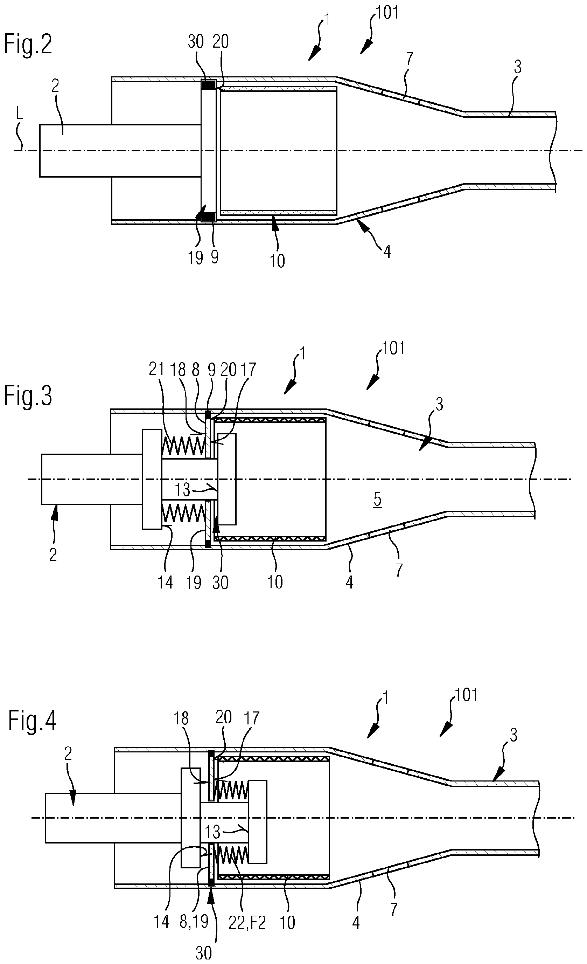

Figur 2 zeigt eine vereinfachte Ausführung gemäß Figur 1a im Normalbetrieb oder auch im unbelasteten Zustand. Bei dieser ist der Druckteller 8 direkt von der Zugstange, d.h. dem ersten Kraftübertragungselement 2 gebildet. Die kraftübertragende Verbindung 30 zwischen den beiden Kraftübertragungselementen 2, 3 erfolgt direkt. Das Kraftübertragungselement 2 ist dazu im Bereich des zum Kraftübertragungselement 3 weisenden Endes mit einer Querschnittsvergrößerung ausgebildet. Diese bildet den Druckteller 8 und gleichzeitig das Betätigungselement 19 für das Energieverzehrelement 10. Die Sollbruchstelle 9 ist direkt in die Verbindung 30 integriert. Dies wird beispielsweise dadurch erzielt, indem Abreißelemente die Zugstange bzw. den Druckteller mit dem Kraftübertragungselement 3 verbinden. Im Normalbetrieb, d.h. bei Übertragung von Zugkräften und bis zu einer maximal zulässigen Stoßkraft werden diese Kräfte über die Verbindung zwischen beiden Kraftübertragungselementen übertragen. Bei Überschreitung einer vordefinierten maximal zulässigen Stoßkraft sprechen diese an und die Verbindung wird aufgehoben. Der Endabschnitt der Zugstange bzw. der den Druckteller 8 bildende Bereich mit seinem Flächenbereich 20 fungiert jetzt als Beaufschlagungselement 19 für das Energieverzehrelement 10 und drückt dieses durch den Düsenabschnitt 4 mit dem in den Figuren 1b und 1c gezeigtem Ergebnis.

Zeigen die Figuren 1 und 2 Ausführungen von Zug-/Stoßeinrichtungen 1 mit nur destruktivem Energieverzehr, verdeutlichen die Figuren 3 bis 5 Weiterbildungen mit reversiblem Energieverzehr.

Die Figur 3 zeigt eine Ausführung gemäß Figur 1a mit zusätzlicher reversibler Energieverzehreinrichtung 21, insbesondere Energieverzehrelement. Diese ist in Richtung einer über die Zugstange eingeleiteten Stoßkraft betrachtet dem irreversiblen Energieverzehrelement 10 vorgeschaltet. Die reversible Energieverzehreinrichtung 21 fungiert als Dämpfer. Diese umfasst in besonders vorteilhafter Weise zumindest ein Federelement F1. Bei diesem kann es sich um einzelne Federelemente handeln, denkbar sind auch Federpakete, insbesondere Gummifederpakete, wobei ein oder mehrere in Reihe und/oder parallel geschaltet sein können. Die reversible Energieverzehreinrichtung 21 stützt sich dabei einerseits am Kraftübertragungselement 2, insbesondere dem Druckanschlag 14 der Zugstange ab und andererseits am Druckteller 8 bzw. dem Kraftübertragungselement 3. D.h. die Stoßkräfte werden nicht direkt auf das Kraftübertragungselement 3 übertragen sondern werden durch die elastischen Elemente der Energieverzehreinrichtung 21 abgedämpft. Die Energieverzehreinrichtung 21 stellt sich nach Wegfall der Kräfte wieder zurück.

Gegenüber der Ausführung in Figur 3 zeigt Figur 4 eine Weiterbildung gemäß Figur 1a mit zusätzlicher reversibler Energieverzehreinrichtung 22. Diese ist in Richtung einer über die Zugstange eingeleiteten Zugkraft betrachtet zwischen erstem und zweitem Kraftübertragungselement 2, 3 angeordnet. Die reversible Energieverzehreinrichtung 22 fungiert als Dämpfer und umfasst in besonders vorteilhafter Weise zumindest ein Federelement F2. Bei diesem kann es sich um einzelne Federelemente handeln, denkbar sind auch Federpakete, insbesondere Gummifederpakete, wobei ein oder mehrere in Reihe und/oder parallel geschaltet sein können. Die reversible Energieverzehreinrichtung 22 stützt sich dabei einerseits am Kraftübertragungselement 2, insbesondere dem Zuganschlag 13 der Zugstange ab und andererseits am Druckteller 8 bzw. dem Kraftübertragungselement 3. D.h. die Zugkräfte werden nicht direkt auf das Kraftübertragungselement 3 übertragen sondern werden durch die elastischen Elemente der Energieverzehreinrichtung 22 abgedämpft. Die Energieverzehreinrichtung 22 stellt sich nach Wegfall der Kräfte wieder zurück.

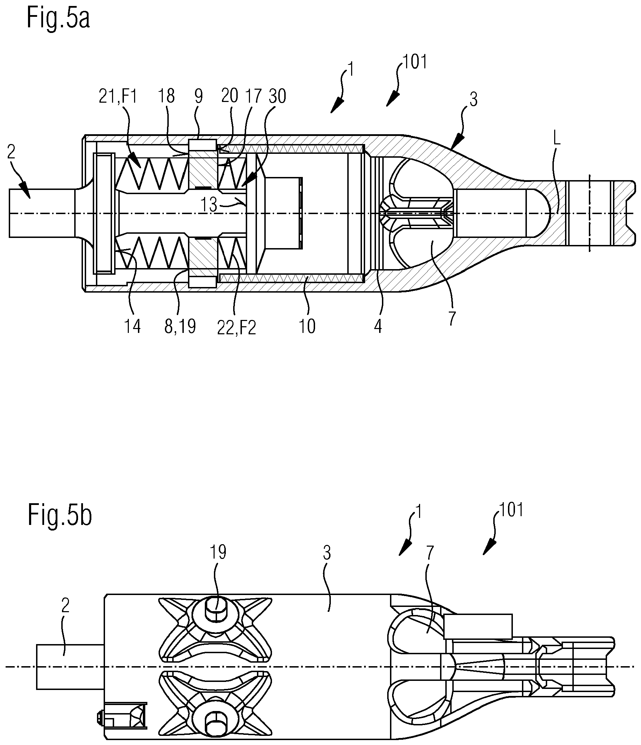

Figur 5a und 5b zeigen eine Kombination der in den Figuren 1 bis 4 dargestellten Möglichkeiten der Integration reversiblen Energieverzehrs. Die hier dargestellte Ausbildung stellt eine besonders kompakte und wirksame Zug-/Stoßeinrichtung dar, welche zusätzlich zum destruktiven Energieverzehrelement 10 einen reversiblen Energieverzehr sowohl in Zug- als auch Stoßrichtung Z und S vorsieht. Die Kraftübertragungselemente 2 und 3 sind koaxial zueinander angeordnet und derart ausgebildet, dass eines der Kraftübertragungselemente, hier die Zugstange mit ihrem zum anderen Kraftübertragungselement 3 in Form eines Gegenelementes gerichteten Endbereich von diesem aufgenommen werden kann. D.h. das als Gegenelement fungierende Kraftübertragungselement 3 bildet einen Innenraum 5, in welchem der Endbereich der Zugstange eingeführt wird. Das Kraftübertragungselement 3 ist dazu als rohrförmiges Element mit zylindrischem oder elliptischem Querschnitt ausgebildet. Der Druckteller 8 ist vorzugsweise als scheiben- oder plattenförmiges Element ausgeführt und bildet mit den voneinander wegweisenden Stirnseiten jeweils einen Zugkraftanschlag-Flächenbereich 17 und einen Druckkraftanschlag-Flächenbereich 18 aus. Der Druckteller 8 ist über Verbindungseinrichtungen, vorzugsweise von die Funktion der Sollbruchstelle übernehmenden Abreißelementen mit dem Gegenelement verbunden. Die Zugstange ist durch eine Öffnung des Drucktellers geführt. Der Druckteller 8 ist in Längsrichtung betrachtet zwischen Zuganschlag 13 und Druckanschlag 14 der Zugstange angeordnet. Der reversible Energieverzehr in Zug- und in Stoßrichtung wird über reversible Energieverzehreinrichtungen 21 und 22 in Form von Federeirichtungen F1 und F2 realisiert. Dabei ist eine reversible Energieverzehreinrichtung 22 in Zugrichtung zwischen Zuganschlag 13 und Druckteller 8, insbesondere dem Flächenbereich 17 vorgesehen. Eine weitere reversible Energieverzehreinrichtung 21 ist zwischen Druckanschlag 14 und Flächenbereich 18 am Druckteller vorgesehen. Die Energieverzehreinrichtung 21 ist dem irreversiblem Energieverzehrelement 10 funktional vorgeschaltet, d.h. bis zum Erreichen der maximal zulässigen kritischen Stoßkraft können in die Zug-/Stoßeinrichtung 1 eingeleitete Stoßkräfte über die reversible Energieverzehreinrichtung 21 abgebaut werden. Erst nach Erreichen der maximal zulässigen Stoßkraft bewirkt eine weitere Erhöhung eine Aufhebung der Verbindung zwischen erstem und zweitem Kraftübertragungselement und eine Relativbewegung dieser zueinander. Die Federeinrichtung F1 ist dann vorzugsweise auf Block. Dabei wird der Druckteller am Innenumfang 11 des Kraftübertragungselementes 3 geführt und beaufschlagt das Energieverzehrelement 10, indem es dieses durch den Düsenabschnitt 4 drückt.

Das Energieverzehrelement 10 ist im dargestellten Fall als zylindrische Hülse ausgebildet, welche frei von einer Verbindung zum Kraftübertragungselement 3 ist. Dieses ist in Längsrichtung der Zug-/Stoßeinrichtung 1 betrachtet, lediglich zwischen erstem und zweitem Kraftübertragungselement in radialer Richtung angeordnet. Im Einzelnen ist das Energieverzehrelement 10 vorzugsweise mit einem Außendurchmesser ausgebildet der dem Innendurchmesser des Kraftübertragungselementes 3 vor dem Düsenabschnitt entspricht oder mit entsprechender Spielpassung zu diesem. Dies gilt in Analogie zur Gewährleistung einer Führungsfunktion für die Zugstange auch für den Zuganschlag bildenden Bereich an der Zugstange. Zwischen dem Außenumfang dieses Bereiches und dem Innenumfang des Energieverzehrelementes 10 ist zumindest eine Spielpassung vorgesehen.

In Längsrichtung betrachtet ist das irreversible Energieverzehrelement 10 zwischen Druckteller 8 und Düsenabschnitt 4 angeordnet, Die Anordnung erfolgt in Stoßrichtung betrachtet der Verbindung zwischen Kraftüberragungselement 2 und 3 nachgeordnet und dem Düsenabschnitt 4 vorgeordnet.

Zeigt Figur 5a einen Teilschnitt, verdeutlicht die Figur 5b eine Ansicht von außen. Erkennbar sind hier die Verbindungselemente zwischen Druckteller 8 und Gegenelement in Form von Abreißelementen, insbesondere Abreißschrauben.

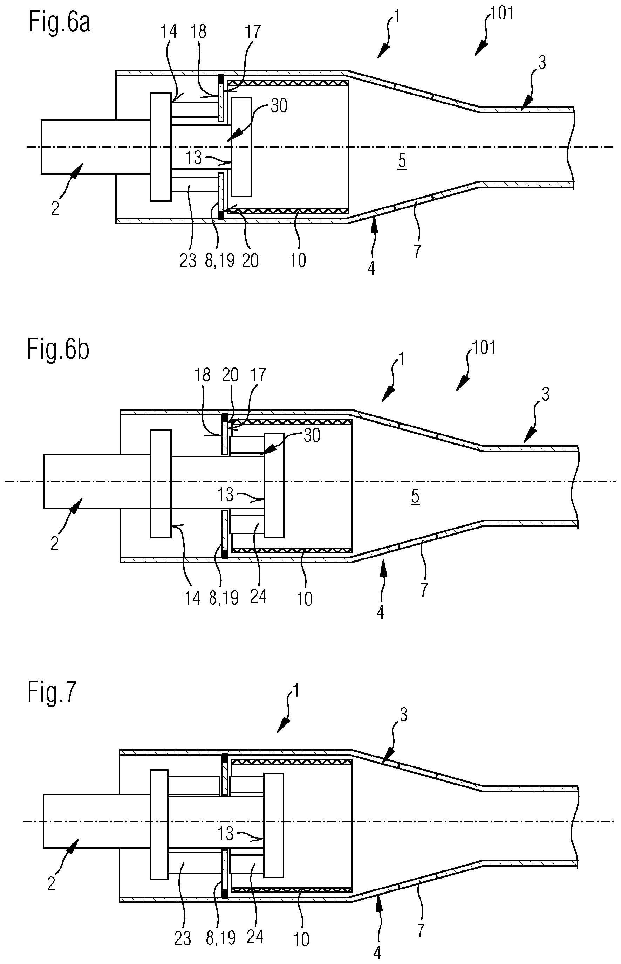

Die Figur 6a zeigt eine Ausführung gemäß Figur 3. Die Figur 6b zeigt eine Ausführung gemäß Figur 4. Figur 7 zeigt eine Ausführung gemäß Figur 5a.
Der Grundaufbau und die Grundfunktion entsprechen denen in Figur 3, 4 und 5a. Die Energieverzehreinrichtungen 21 und 22 sind hier jedoch als eine von Federeinheiten abweichende Energieverzehreinrichtung ausgebildet und daher mit 23 und 24 bezeichnet. Bei diesen Energieverzehreinrichtungen kann es sich beispielsweise um hydraulische bzw. gashydraulische Energieverzehreinrichtungen handeln. Denkbar sind auch Kombinationen mit Federeinrichtungen. Jede der Energieverzehreinrichtungen 21 und 22 kann hier aus einer Reihen- oder Parallelschaltung von Energieverzehrelementen bestehen.

Die Figur 8 zeigt eine Weiterbildung einer Ausführung gemäß Figur 5a. Bei dieser ist zusätzlich ein das zweite Kraftübertragungselement 3 am zum ersten Kraftübertragungselement 2 gerichteten Endbereich in Umfangsrichtung über einen Teilbereich der Erstreckung in Längsrichtung umschließender Bereich 26 an der Zugstange vorgesehen. Dieser Bereich kann zusätzlich auch als Verformungsrohr ausgebildet sein und bei Relativbewegung der Kraftübertragungselemente 2, 3 einen zusätzlichen Energieverzehr durch Aufweitung bereitstellen.

Die Figur 10 verdeutlicht demgegenüber eine zweite Ausführung, bei welchem das irreversible Energieverzehrelement 10 am Außenumfang des Kraftübertragungselementes 3 angeordnet ist. Die Kopplung 30 des als Zugstange ausgebildeten ersten Kraftübertragungselementes 2, die Zug- und Druckanschläge 13, 14 sowie die Kopplung des Drucktellers 8 mit dem zweiten Kraftübertragungselement 3 und die Anordnung des Energieverzehrs zwischen Druckteller 8 und Zugstange erfolgt wie in Figur 5a beschrieben. Der Düsenabschnitt 4 ist jedoch in das erste Kraftübertragungselement 2 integriert. Dazu weist dieses einen hülsenartigen Abschnitt 26 auf, welcher das Kraftübertragungselement 3 in Umfangsrichtung umschließt.

Bei Überschreitung einer maximal zulässigen Stoßkraft wird auch hier die kraftübertragende Verbindung 30 zwischen Kraftübertragungselement 2 und 3 durch Ansprechend der Sollbruchstellen 9 zwischen Druckteller 8 und Gegenelement aufgehoben und die Kraftübertragungselemente 2, 3 bewegen sich gegeneinander. Dabei stützt sich das Energieverzehrelement 10 an einem am Außenumfang umlaufenden Flansch als Beaufschlagungselement 19 ab und wird bei Relativbewegung der Kraftübertragungselemente 2 und 3 durch den Düsenabschnitt 4 gedrückt.

### Bezugszeichen

- 1: Zug-/Stoßeinrichtung
- 2: Kraftübertragungselement
- 3: Kraftübertragungselement
- 4: Düsenabschnitt
- 5: Innenraum
- 6:
- 7: Durchgangsöffnung
- 10: Irreversibles Energieverzehrelement
- 11: Innenumfang
- 12: Wand
- 13: Zuganschlag
- 14: Druckanschlag
- 15: Kupplungskopf
- 16: Wagenkasten
- 17: Zugkraftanschlag-Flächenbereich
- 18: Stoßkraftanschlag-Flächenbereich
- 19: Beaufschlagungselement
- 20: Flächenbereich
- 21: Energieverzehreinrichtung
- 22: Energieverzehreinrichtung
- 23: Hydraulische, gashydraulische Energieverzehreinrichtung
- 24: Hydraulische, gashydraulische Energieverzehreinrichtung
- 26: hülsenartiger Bereich
- 30: Kraftübertragende Kopplung/Verbindung
- 100: Kraftübertragungseinheit
- 101: Kupplungsstange

## Patentansprüche

1. Zug-/Stoßeinrichtung (1), insbesondere für Kupplungen von spurgeführten Fahrzeugen mit zwei sich entlang einer Längsachse erstreckenden Kraftübertragungselementen (2, 3), die zum Übertragen von Zug- und Stoßkräften kraftübertragend miteinander verbunden sind und bei Überschreitung einer maximal zulässigen Stoßkraft relativ zueinander bewegbar sind und
mit einer irreversiblen Energieverzehreinrichtung, welche derart ausgebildet und angeordnet ist, bei Überschreitung der maximal zulässigen Stoßkraft anzusprechen; wobei die irreversible Energieverzehreinrichtung zumindest ein irreversibles Energieverzehrelement (10) umfasst, welches zumindest teil- oder bereichsweise aus einem Faserverbundwerkstoff, insbesondere Faser-Kunststoff-Verbundwerkstoff besteht und die irreversible Energieverzehreinrichtung wenigstens bereichsweise von einem ersten der beiden Kraftübertragungselemente (3) aufgenommen ist, wobei das erste Kraftübertragungselement (3) einen Düsenabschnitt (4) aufweist oder ausbildet und das irreversible Energieverzehrelement (10) derart gegenüber dem Düsenabschnitt (4) und dem anderen zweiten Kraftübertragungselement (2) angeordnet ist, dass bei Einleitung einer die maximal zulässige Stoßkraft überschreitenden Stoßkraft in die Zug-/Stoßeinrichtung (1) das irreversible Energieverzehrelement (10) durch den Düsenabschnitt (4) unter zumindest teilweiser Zerfaserung der Faserverbundwerkstoffbereiche gedrückt wird.

2. Zug-/Stoßeinrichtung (1) nach Anspruch 1;
**dadurch gekennzeichnet,**
**dass** im ersten Kraftübertragungselement (3) in Durchtriebsrichtung des Energieverzehrelementes (10) durch den Düsenabschnitt (4) betrachtet im Bereich des Düsenabschnittes (4) und/oder dem Düsenabschnitt (4) nachgeordnet ein Hohlraumbereich vorgesehen ist, welcher derart ausgebildet und angeordnet ist, die beim Durchdrücken des irreversiblen Energieverzehrelementes (10) durch den Düsenabschnitt (4) entstehenden Fasern oder Bruchteile zumindest teilweise, vorzugsweise vollständig aufzunehmen.

3. Zug-/Stoßeinrichtung (1) nach Anspruch 1 oder 2,
**dadurch gekennzeichnet,**
**dass** im ersten Kraftübertragungselement (3) in Durchtriebsrichtung des Energieverzehrelementes (10) durch den Düsenabschnitt (4) betrachtet im Bereich des Düsenabschnittes (4) und/oder dem Düsenabschnitt (4) nachgeordnet ein Hohlraumbereich vorgesehen ist, und in der Wandung (12) des ersten Kraftübertragungselementes (3) wenigstens eine, vorzugsweise eine Mehrzahl von in Umfangsrichtung des ersten Kraftübertragungselementes (3) angeordneten und sich durch die Wandung (12) vom Hohlraumbereich zum Außenumfang erstreckenden Durchgangsöffnungen (7) vorgesehen sind, wobei die einzelne Durchgangsöffnung (7) derart angeordnet und ausgebildet ist, beim Durchdrücken des irreversiblen Energieverzehrelementes (10) durch den Düsenabschnitt (4) entstehenden Fasern oder Bruchteile zumindest teilweise abzuführen.

4. Zug-/Stoßeinrichtung (1) nach einem der vorhergehenden Ansprüche;
**dadurch gekennzeichnet,**
**dass** das Ansprechverhalten des irreversiblen Energieverzehrelementes (10) und/oder der Betrag der mit dem irreversiblen Energieverzehrelement verzehrbaren Stoßenergie als Funktion zumindest einer der nachfolgend genannten Parameter des Energieverzehrelementes (10) vorab einstellbar ist:
- Faserarchitektur und/oder Lagenaufbau
- Form und/oder Dimensionierung, insbesondere Länge und/oder Wandstärke.

5. Zug-/Stoßeinrichtung (1) nach einem der vorhergehenden Ansprüche;
**dadurch gekennzeichnet,**
**dass** das einzelne irreversible Energieverzehrelement (10) als ein Element ausgewählt aus der nachfolgenden Gruppe von Elementen ausgebildet ist:
- Hohlkörper, insbesondere Hohlkörper mit zylindrischem oder elliptischem Querschnitt
- Hülse
- Vollprofilelement.

6. Zug-/Stoßeinrichtung (1) nach einem der vorhergehenden Ansprüche;
**dadurch gekennzeichnet,**
**dass** die irreversible Energieverzehreinrichtung eine Mehrzahl von irreversiblen Energieverzehrelementen (10) umfasst, die in Reihe angeordnet sind.

7. Zug-/Stoßeinrichtung (1) nach einem der vorhergehenden Ansprüche;
**dadurch gekennzeichnet,**
**dass** die irreversible Energieverzehreinrichtung eine Mehrzahl von Energieverzehrelementen (10) umfasst, die parallel zueinander angeordnet sind, wobei die einzelnen parallel zueinander angeordneten Energieverzehrelemente (10) koaxial zueinander angeordnet.

8. Zug-/Stoßeinrichtung (1) nach einem der vorhergehenden Ansprüche;
**dadurch gekennzeichnet,**
**dass** das Düsenabschnitt (4) aufweisende erste Kraftübertragungselement (3) eine Vielzahl von in Umfangsrichtung um die Längsachse (L) angeordneten einzelnen Düsenelementen aufweist und die irreversible Energieverzehreinrichtung eine Mehrzahl von irreversiblen Energieverzehrelementen (10) umfasst, die parallel zueinander angeordnet sind, wobei die Energieverzehrelemente (10) in Umfangsrichtung um die Längsachse beabstandet zueinander derart angeordnet und ausgebildet sind, um bei Überschreitung der maximal zulässigen Stoßkraft durch die einzelnen Düsenelemente gedrückt zu werden.

9. Zug-/Stoßeinrichtung (1) nach einem der vorhergehenden Ansprüche;
**dadurch gekennzeichnet,**
**dass** das einzelne irreversible Energieverzehrelement (10) außerhalb des Kraftflusses angeordnet ist und am ersten Kraftübertragungselement frei von einer Verbindung mit diesem geführt ist.

10. Zug-/Stoßeinrichtung (1) nach einem der Ansprüche 1 bis 8;
**dadurch gekennzeichnet,**
**dass** das einzelne irreversible Energieverzehrelement (10) am zweiten Kraftübertragungselement (3) oder einem vom zweiten Kraftübertragungselement (3) wenigstens mittelbar beaufschlagten Element (19) geführt ist.

11. Zug-/Stoßeinrichtung (1) nach einem der Ansprüche 1 bis 8,
**dadurch gekennzeichnet,**
**dass** das einzelne irreversible Energieverzehrelement (10) am ersten Kraftübertragungselement (3) befestigt ist oder zwischen diesem und dem zweiten Kraftübertragungselement (2) oder dem vom zweiten Kraftübertragungselement (2) wenigstens mittelbar beaufschlagten Element zur Einwirkung auf das irreversible Energieverzehrelement (10) vorgespannt angeordnet ist.

12. Zug-/Stoßeinrichtung (1) nach einem der vorhergehenden Ansprüche;
**dadurch gekennzeichnet,**
**dass** in der kraftübertragenden Verbindung (30) der Kraftübertragungselemente (2, 3) zumindest ein Sollbruchstelle vorgesehen ist, , welche bei der zulässigen maximalen Stoßkraft anspricht und unter Aufhebung der kraftübertragenden Verbindung eine Relativbewegung von erstem und zweitem Kraftübertragungselement zueinander zulässt, wobei die Sollbruchstelle vorzugsweise von Verbindungseinrichtungen gebildet wird, insbesondere Abreißelementen, Abreißschrauben.

13. Zug-/Stoßeinrichtung (1) nach einem der vorhergehenden Ansprüche;
**dadurch gekennzeichnet,**
**dass** das erste Kraftübertragungselement (2, 3) als zumindest einseitig offener Hohlkörper, vorzugsweise rohrförmiger Körper ausgebildet ist und das zweite Kraftübertragungselement (3, 2) als Zugstange, wobei die Zugstange mit ihrem zum ersten Kraftübertragungselement (2, 3) weisenden Endbereich vom ersten Kraftübertragungselement (2, 3) aufgenommen ist.

14. Zug-/Stoßeinrichtung (1) nach einem der vorhergehenden Ansprüche;
**dadurch gekennzeichnet,**
**dass** die kraftübertragende Verbindung (30) zwischen erstem und zweiten Kraftübertragungselement (2, 3) direkt erfolgt und in der Verbindung (30) eine Sollbruchstelle integriert ist, welche bei der zulässigen maximalen Stoßkraft anspricht und unter Aufhebung der kraftübertragenden Verbindung eine Relativbewegung von erstem und zweitem Kraftübertragungselement (2, 3) zueinander zulässt.

15. Zug-/Stoßeinrichtung (1) nach einem der vorgenannten Ansprüche,
**dadurch gekennzeichnet,**
**dass** die kraftübertragende Verbindung (30) zwischen erstem und zweiten Kraftübertragungselement (2, 3) in Zugkraftrichtung unter Zwischenschaltung einer Dämpfungseinrichtung (22, 24), insbesondere reversiblen Energieverzehreinrichtung erfolgt.

16. Zug-/Stoßeinrichtung (1) nach einem der vorhergehenden Ansprüche;
**dadurch gekennzeichnet,**
**dass** die kraftübertragende Verbindung (30) zwischen erstem und zweitem Kraftübertragungselement (2, 3) in Stoßkraftrichtung unter Zwischenschaltung einer Dämpfungseinrichtung (21, 23), insbesondere reversiblen Energieverzehreinrichtung erfolgt.

17. Zug-/Stoßeinrichtung (1) nach einem der vorhergehenden Ansprüche;
**dadurch gekennzeichnet,**
**dass** die einzelne Dämpfungseinrichtung als Einrichtung ausgewählt aus der nachfolgende Gruppe ausgebildet ist:
- Federeinrichtung, insbesondere Federelemente und Federpakete
- gashydraulische Dämpfungseinrichtung
- hydrostatische Dämpfungseinrichtung

18. Zug-/Stoßeinrichtung (1) nach einem der vorhergehenden Ansprüche;
**dadurch gekennzeichnet,**
**dass** ein einen Druckteller (8) bildendes scheiben- oder plattenförmiges Element vorgesehen ist, welches koaxial zum ersten Kraftübertragungselement (2) angeordnet ist und mit dem ersten Kraftübertragungselement (2) in Stoßrichtung dem Düsenabschnitt (4) in Längsrichtung betrachtet vorgeordnet verbunden ist, und einen Flächenbereich zur Beaufschlagung des irreversiblen Energieverzehrelementes (10) bildet, wobei der Druckteller an seinen voneinander wegweisenden Stirnseiten jeweils Flächenbereiche zum Zusammenwirken mit einem Zug- oder Druckanschlag des zweiten Kraftübertragungselementes, insbesondere der Zugstange bildet, wobei die Verbindung zwischen Druckteller (8) und erstem Kraftübertragungselement durch eine Sollbruchstelle charakterisiert ist, die bei Überschreitung einer maximal zulässigen Stoßkraft anspricht unter Aufhebung der kraftübertragenden Verbindung zwischen erstem und zweitem Kraftübertragungselement.

19. Kraftübertragungseinheit (100), insbesondere für den Einsatz in schienengebundenen Fahrzeugen, mit einer Zug-/Stoßeinrichtung (1) nach einem der Ansprüche 1 bis 18.

20. Kraftübertragungseinheit (100) nach Anspruch 19,
**dadurch gekennzeichnet,**
**dass** diese als Kupplungsstange (101) ausgebildet ist.

## Claims

1. Traction/impact device (1), in particular for couplings of track-guided vehicles having two force transmission elements (2, 3) which extend along a longitudinal axis and which are connected to each other in a force-transmitting manner in order to transmit traction and impact forces and which, when a maximum permissible impact force is exceeded, can be moved relative to each other and having an irreversible energy absorption device which is constructed and arranged so as to respond when the maximum permissible impact force is exceeded;
wherein
the irreversible energy absorption device comprises at least one irreversible energy absorption element (10) which at least partially or in regions comprises a fibre composite material, in particular fibre plastics composite material and the irreversible energy absorption device is at least in regions received by a first of the two force transmission elements (3), wherein the first force transmission element (3) has or forms a nozzle portion (4) and the irreversible energy absorption element (10) is arranged in such a manner with respect to the nozzle portion (4) and the other second force transmission element (2) that, when an impact force which exceeds the maximum permissible impact force is introduced into the traction/impact device (1), the irreversible energy absorption element (10) is pressed through the nozzle portion (4) with at least partial defibration of the fibre composite material regions.

2. Traction/impact device (1) according to Claim 1;
**characterised in that,**
in the first force transmission element (3) when viewed in the drive direction of the energy absorption element (10) through the nozzle portion (4), in the region of the nozzle portion (4) and/or downstream of the nozzle portion (4) there is provided a hollow space region, which is constructed and arranged so as to at least partially, preferably completely receive the fibres or fragments which are produced when the irreversible energy absorption element (10) is pressed through the nozzle portion (4).

3. Traction/impact device (1) according to Claim 1 or 2,
**characterised in that,**
in the first force transmission element (3) when viewed in the drive direction of the energy absorption element (10) through the nozzle portion (4), in the region of the nozzle portion (4) and/or downstream of the nozzle portion (4) a hollow space region is provided, and in the wall (12) of the first force transmission element (3) at least one, preferably a plurality of through-openings (7) which are arranged in the peripheral direction of the first force transmission element (3) and which extend through the wall (12) from the hollow space region to the outer periphery are provided, wherein the individual through-opening (7) is arranged and constructed so as to at least partially discharge fibres or fragments which are produced when the irreversible energy absorption element (10) is pressed through the nozzle portion (4) .

4. Traction/impact device (1) according to any one of the preceding claims;
**characterised in that**
the response behaviour of the irreversible energy absorption element (10) and/or the value of the impact energy which can be consumed by the irreversible energy absorption element can be adjusted in advance as a function of at least one of the parameters of the energy absorption element (10) mentioned below:
- fibre architecture and/or layer structure,
- shape and/or sizing, in particular length and/or wall thickness.

5. Traction/impact device (1) according to any one of the preceding claims;
**characterised in that**
the individual irreversible energy absorption element (10) is constructed as an element selected from the following group of elements:
- hollow member, in particular hollow member having a cylindrical or elliptical cross-section,
- sleeve,
- solid profile element.

6. Traction/impact device (1) according to any one of the preceding claims;
**characterised in that**
the irreversible energy absorption device comprises a plurality of irreversible energy absorption elements (10) which are arranged in series.

7. Traction/impact device (1) according to any one of the preceding claims;
**characterised in that**
the irreversible energy absorption device comprises a plurality of energy absorption elements (10) which are arranged parallel with each other, wherein the individual energy absorption elements (10) which are arranged parallel with each other are arranged coaxially with each other.

8. Traction/impact device (1) according to any one of the preceding claims;
**characterised in that**
the first force transmission element (3) which has nozzle portion (4) has a large number of individual nozzle elements which are arranged in the peripheral direction about the longitudinal axis (L) and the irreversible energy absorption device comprises a plurality of irreversible energy absorption elements (10) which are arranged parallel with each other, wherein the energy absorption elements (10) are arranged and constructed in the peripheral direction spaced apart from each other about the longitudinal axis so as to be pressed through the individual nozzle elements when the maximum permissible impact force is exceeded.

9. Traction/impact device (1) according to any one of the preceding claims;
**characterised in that**
the individual irreversible energy absorption element (10) is arranged outside the force path and is guided on the first force transmission element in a manner free from a connection thereto.

10. Traction/impact device (1) according to any one of Claims 1 to 8;
**characterised in that**
the individual irreversible energy absorption element (10) is guided on the second force transmission element (3) or an element (19) which is at least indirectly acted on by the second force transmission element (3).

11. Traction/impact device (1) according to any one of Claims 1 to 8,
**characterised in that**
the individual irreversible energy absorption element (10) is secured to the first force transmission element (3) or is arranged in a pretensioned manner between this element and the second force transmission element (2) or the element which is at least indirectly acted on by the second force transmission element (2) in order to act on the irreversible energy absorption element (10).

12. Traction/impact device (1) according to any one of the preceding claims;
**characterised in that,**
in the force-transmitting connection (30) of the force transmission elements (2, 3), there is provided at least one desired breaking location which responds at the maximum permissible impact force and which, with the force-transmitting connection being cancelled, permits a relative movement of the first and second force transmission elements with respect to each other, wherein the desired breaking location is preferably formed by connection devices, in particular shear elements, shear bolts.

13. Traction/impact device (1) according to any one of the preceding claims;
**characterised in that**
the first force transmission element (2, 3) is constructed as a hollow member which is open at least at one side, preferably a tubular member, and the second force transmission element (3, 2) is constructed as a pull rod, wherein the pull rod is received by the first force transmission element (2, 3) with the end region thereof facing the first force transmission element (2, 3).

14. Traction/impact device (1) according to any one of the preceding claims;
**characterised in that**
the force-transmitting connection (30) between the first and second force transmission elements (2, 3) is carried out directly and in the connection (30) there is integrated a desired breaking location which responds at the maximum permissible impact force and which, with the force-transmitting connection being cancelled, permits a relative movement of the first and second force transmission elements (2, 3) with respect to each other.

15. Traction/impact device (1) according to any one of the preceding claims,
**characterised in that**
the force-transmitting connection (30) between the first and second force transmission elements (2, 3) is carried out in the traction force direction with a damping device (22, 24), in particular a reversible energy absorption device, being interposed.

16. Traction/impact device (1) according to any one of the preceding claims;
**characterised in that**
the force-transmitting connection (30) between the first and second force transmission elements (2, 3) is carried out in the impact force direction with a damping device (21, 23), in particular a reversible energy absorption device, being interposed.

17. Traction/impact device (1) according to any one of the preceding claims;
**characterised in that**
the individual damping device is constructed as a device selected from the following group:
- resilient device, in particular resilient elements and spring assemblies,
- gas hydraulic damping device,
- hydrostatic damping device.

18. Traction/impact device (1) according to any one of the preceding claims;
**characterised in that**
there is provided a disc-like or plate-like element which forms a pressure plate (8) and which is arranged coaxially with the first force transmission element (2) and which is connected to the first force transmission element (2) in the impact direction upstream of the nozzle portion (4) when viewed in the longitudinal direction, and forms a surface region for acting on the irreversible energy absorption element (10), wherein the pressure plate forms at the end sides thereof facing away from each other in each case surface regions for cooperation with a traction or pressure stop of the second force transmission element, in particular the pull rod, wherein the connection between the pressure plate (8) and the first force transmission element is **characterised by** a desired breaking location which responds when a maximum permissible impact force is exceeded with the force-transmitting connection between the first and second force transmission elements being cancelled.

19. Force transmission unit (100), in particular for use in rail-bound vehicles having a traction/impact device (1) according to any one of Claims 1 to 18.

20. Force transmission unit (100) according to Claim 19,
**characterised in that**
it is constructed as a coupling rod (101).

## Revendications

1. Dispositif de traction/poussée (1), destiné en particulier à des accouplements de véhicules guidés munis de deux éléments de transmission de puissance (2, 3) qui s'étendent le long d'un axe longitudinal, qui sont reliés l'un à l'autre pour transmettre des forces de traction et de poussée et relativement et qui sont mobiles l'un par rapport à l'autre lorsqu'une force de poussée maximale admissible est dépassée, et d'un dispositif de dissipation d'énergie irréversible qui est conçu et disposé de manière à réagir lorsque la force de poussée maximale admissible est dépassée ;
le dispositif de dissipation d'énergie irréversible comprenant au moins un élément de dissipation d'énergie irréversible (10) qui comprend au moins partiellement ou par endroits un matériau composite à fibres, en particulier un matériau composite à fibres et matière plastique, et le dispositif de dissipation d'énergie irréversible étant reçu au moins par endroits par un premier des deux éléments de transmission de force (3), le premier élément de transmission de force (3) comportant ou formant une portion de buse (4) et l'élément de dissipation d'énergie irréversible (10) étant disposé par rapport à la portion de buse (4) et à l'autre deuxième élément de transmission de force (2) de telle manière que, lorsqu'une force de poussée, dépassant la force de poussée maximale admissible est injectée dans le dispositif de traction/poussée (1), l'élément de dissipation d'énergie irréversible (10) est pressé à travers la portion de buse (4) avec un défibrage au moins partiel des zones de matériau composite à fibres.

2. Dispositif de traction/poussée (1) selon la revendication 1, **caractérisé en ce que**
dans le premier élément de transmission de force (3), une zone à cavité est prévue dans la zone de la portion de buse (4) et/ou en aval de la portion de buse (4) lorsque l'on regarde dans le sens déplacement de l'élément de dissipation d'énergie (10) à travers la portion de buse (4), laquelle zone à cavité est conçue et disposée de manière à recevoir au moins partiellement, de préférence complètement, les fibres ou les fractions produites lorsque l'élément de dissipation d'énergie irréversible (10) est poussé à travers la portion de buse (4).

3. Dispositif de traction/poussée (1) selon la revendication 1 ou 2,
**caractérisé en ce que**
dans le premier élément de transmission de force (3), une zone à cavité est prévue dans la zone de la portion de buse (4) et/ou en aval de la portion de buse (4) lorsque l'on regarde dans le sens de déplacement de l'élément de dissipation d'énergie (10) à travers la portion de buse (4),
et au moins une ouverture de passage, de préférence une pluralité d'ouvertures de passage (7), disposées dans la direction périphérique du premier élément de transmission de force (3) et s'étendant à travers la paroi (12) de la zone à cavité à la périphérie extérieure, sont ménagées dans la paroi (12) du premier élément de transmission de force (3), l'ouverture de passage individuelle (7) étant disposée et conçue de manière à éliminer au moins partiellement les fibres ou fractions produites lorsque l'élément de dissipation d'énergie irréversible (10) est poussé à travers la portion de buse (4).

4. Dispositif de traction/poussée (1) selon l'une des revendications précédentes,
**caractérisé en ce que**
le comportement de réponse de l'élément de dissipation d'énergie irréversible (10) et/ou la quantité d'énergie de poussée dispersée par l'élément de dispersion d'énergie irréversible peuvent être réglés à l'avance en fonction de l'un au moins des paramètres, mentionnés ci-dessous, de l'élément de dissipation d'énergie (10) :
- architecture des fibres et/ou structure des couches,
- forme et/ou dimensionnement, notamment longueur et/ou épaisseur de paroi.

5. Dispositif de traction/poussée (1) selon l'une des revendications précédentes,
**caractérisé en ce que**
l'élément de dissipation d'énergie irréversible individuel (10) est conçu comme un élément choisi dans le groupe d'éléments suivant :
- corps creux, en particulier corps creux à section transversale cylindrique ou elliptique,
- manchon,
- élément à profil plein.

6. Dispositif de traction/poussée (1) selon l'une des revendications précédentes,
**caractérisé en ce que**
le dispositif de dissipation d'énergie irréversible comprend une pluralité d'éléments de dissipation d'énergie irréversibles (10) qui sont disposés en série.

7. Dispositif de traction/poussée (1) selon l'une des revendications précédentes,
**caractérisé en ce que**
le dispositif de dissipation d'énergie irréversible comprend une pluralité d'éléments de dissipation d'énergie (10) qui sont disposés parallèlement les uns aux autres, les éléments de dissipation d'énergie individuels (10) disposés parallèlement les uns aux autres étant disposés coaxialement les uns aux autres.

8. Dispositif de traction/poussée (1) selon l'une des revendications précédentes,
**caractérisé en ce que**
le premier élément de transmission de force (3) comportant la portion de buse (4) comporte une multitude d'éléments de buse individuels disposés dans la direction périphérique autour de l'axe longitudinal (L) et le dispositif de dissipation d'énergie irréversible comprend une pluralité d'éléments de dissipation d'énergie irréversibles (10) qui sont disposés parallèlement les uns aux autres, les éléments de dissipation d'énergie (10) étant disposés et conçus de manière à être espacés les uns des autres dans la direction périphérique autour de l'axe longitudinal afin d'être pressés à travers les éléments de buse individuels lorsque la force de poussée maximale admissible est dépassée.

9. Dispositif de traction/poussée (1) selon l'une des revendications précédentes,
**caractérisé en ce que**
l'élément de dissipation d'énergie irréversible individuel (10) est disposé à l'extérieur du flux de force et est guidé au niveau du premier élément de transmission de force sans liaison avec celui-ci.

10. Dispositif de traction/poussée (1) selon l'une des revendications 1 à 8,
**caractérisé en ce que**
l'élément de dissipation d'énergie irréversible individuel (10) est guidé au niveau du deuxième élément de transmission de force (3) ou d'un élément (19) sollicité au moins indirectement par le deuxième élément de transmission de force (3).

11. Dispositif de traction/poussée (1) selon l'une des revendications 1 à 8,
**caractérisé en ce que**
l'élément de dissipation d'énergie irréversible individuel (10) est fixé au premier élément de transmission de force (3) ou est disposé de manière précontrainte entre ce dernier et le deuxième élément de transmission de force (2) ou l'élément sollicité au moins indirectement par le deuxième élément de transmission de force (2) afin d'agir sur l'élément de dissipation d'énergie irréversible (10).

12. Dispositif de traction/poussée (1) selon l'une des revendications précédentes,
**caractérisé en ce que**
au moins un point de rupture prédéfini est prévu dans la liaison à transmission de force (30) des éléments de transmission de force (2, 3), lequel point de rupture prédéfini réagit à la force d'impact maximale admissible et permet aux premier et deuxième éléments de transmission de force de se déplacer l'un par rapport à l'autre, avec suppression de la liaison à transmission de force, le point de rupture prédéfini étant formé de préférence par des dispositifs de liaison, en particulier des éléments à rupture, des vis à rupture.

13. Dispositif de traction/poussée (1) selon l'une des revendications précédentes,
**caractérisé en ce que**
le premier élément de transmission de force (2, 3) est conçu comme un corps creux, de préférence un corps tubulaire, qui est ouvert au moins sur un côté, et le deuxième élément de transmission de force (3, 2) est conçu comme une tige de traction, la tige de traction munie de sa zone d'extrémité tournée vers le premier élément de transmission de force (2, 3) étant reçue par le premier élément de transmission de force (2, 3).

14. Dispositif de traction/poussée (1) selon l'une des revendications précédentes,
**caractérisé en ce que**
la liaison à transmission de force (30) entre le premier et le deuxième élément de transmission de force (2, 3) est effectuée directement et un point de rupture prédéfini est intégré dans la liaison (30), lequel réagit à la force de poussée maximale admissible et autorise un mouvement relatif du premier et du deuxième élément de transmission de force (2, 3) l'un par rapport à l'autre avec suppression de la liaison de transmission de force.

15. Dispositif de traction/poussée (1) selon l'une des revendications précédentes,
**caractérisé en ce que**
la liaison de transmission de force (30) entre le premier et le deuxième élément de transmission de force (2, 3) est effectuée dans le sens de la force de traction avec l'interposition d'un dispositif d'amortissement (22, 24), en particulier un dispositif de dissipateur d'énergie réversible.

16. Dispositif de traction/poussée (1) selon l'une des revendications précédentes,
**caractérisé en ce que**
la liaison de transmission de force (30) entre le premier et le deuxième élément de transmission de force (2, 3) est effectuée dans le sens de la force de poussée avec l'interposition d'un dispositif d'amortissement (21, 23), en particulier un dispositif de dissipation d'énergie réversible.

17. Dispositif de traction/poussée (1) selon l'une des revendications précédentes,
**caractérisé en ce que**
le dispositif d'amortissement individuel est conçu comme un dispositif sélectionné dans le groupe suivant :
- dispositif à ressort, en particulier éléments à ressort et ensembles de ressorts,
- dispositif d'amortissement hydraulique ou à gaz,
- dispositif d'amortissement hydrostatique

18. Dispositif de traction/poussée (1) selon l'une des revendications précédentes,
**caractérisé en ce que**
un élément en forme de plaque ou de disque formant une plaque de pression (8) est prévu, qui est disposé coaxialement au premier élément de transmission de force (2), qui est relié au premier élément de transmission de force (2) dans le sens de poussée en amont de la portion de buse (4) lorsque l'on regarde dans la direction longitudinale et qui forme une zone de surface destinée à la sollicitation de l'élément de dissipation d'énergie irréversible (10), la plaque de pression formant, sur chacune de ses faces frontales se faisant mutuellement face, des zones de surface destinées à coopérer avec une butée de traction ou de poussée du deuxième élément de transmission de force, en particulier de la tige de traction, la liaison entre la plaque de pression (8) et le premier élément de transmission de force étant **caractérisée par** un point de rupture prédéfini qui réagit lorsqu'une force de poussée maximale admissible est dépassée avec suppression de la liaison de transmission de force entre les premier et deuxième éléments de transmission de force.

19. Unité de transmission de puissance (100), destinée en particulier à être utilisée dans des véhicules sur rails, ladite unité comprenant un dispositif de traction/poussée (1) selon l'une des revendications 1 à 18.

20. Unité de transmission de puissance (100) selon la revendication 19,
**caractérisée en ce que**
elle est conçue comme une tige d'accouplement (101).
